# EUROPEAN PATENT APPLICATION

(11) **EP 2 434 787 A1**
(43) Date of publication of application: **28.03.2012**
(21) Application number: 11007667.6
(22) Date of filing: 21.09.2011
(51) Int. Cl.: H04W 4/06, H04J 14/00, H04L 1/18, H04L 12/18

(54) **Method, public land mobile network and base station entity**

(30) Priority: 24.09.2010 EP 10010531; 24.09.2010 US 386169 P
(71) Applicant: Deutsche Telekom AG, 53113 Bonn (DE)
(72) Inventor: Breitbach, Markus Dr., 53227 Bonn (DE); Frisch, Andreas, 53757 Sankt Augustin (DE)
(74) Representative: Schwöbel, Thilo K.

(57) **Abstract**

The present invention relates to a method for the transmission of data within a public land mobile network from a base station entity to a first User Equipment and at least a second User Equipment, wherein for the downlink transmission to the first User Equipment and the second User Equipment, a Shared Control Channel comprising a plurality of first sub-channels and a Physical Downlink Shared Channel comprising a plurality of second sub-channels are used, wherein each second sub-channel used for the downlink transmission of data to one of the first User Equipment or the second User Equipment is referenced by a first sub-channel out of the plurality of first sub-channels of the Shared Control Channel, wherein for the downlink transmission of identical content data to both the first User Equipment and the second User Equipment:
-- a first sub-channel of the plurality of first sub-channels of the Shared Control Channel is directed to the first User Equipment and provides a reference to a subset of second sub-channels, the subset comprising one second sub-channel or a plurality of second sub-channels of the Physical Downlink Shared Channel, and
-- a further first sub-channel of the plurality of first sub-channels of the Shared Control Channel is directed to the second User Equipment and provides a reference to the identical subset of second sub-channels of the Physical Downlink Shared Channel. The present invention further relates to a public land mobile network, a base station entity, and a program comprising a computer readable program code.

## Description

### BACKGROUND

The present invention relates to a method, a public land mobile network and a base station entity for the transmission of data within the public land mobile network from the base station entity to a first User Equipment and to at least a second User Equipment. Thereby, it is possible to provide a multicast transmission to the first and second User Equipments, i.e. the transmission of identical data to these User Equipments simultaneously.

Presently, mobile communication systems such as Global System of Mobile Communication (GSM), Universal Mobile Telecommunication System (UMTS), and Long Term Evolution (LTE), etc. primarily serve to provide point-to-point communication links, e.g. between one phone (or voice) service user to another phone (or voice) service user of a mobile radio communication network, or between a communication terminal to an internet server.

Furthermore, applications exist to distribute an identical content (or identical traffic data) simultaneously to more than one or even to all mobile terminals within a network cell. Examples thereof include Mobile TV, newsticker applications or the distribution of multimedia content such as electronic newspapers or podcasts.

Within the Universal Mobile Telecommunication System (UMTS) standard, such multicast or broadcast applications to provide such point-to-multipoint communication links have only been introduced lately by means of the feature "Multimedia Broadcast Multicast System (MBMS)". However, MBMS was not very successful as this systems required additional hardware functionality within the User Equipments with the consequence that subscribers were not incited to upgrade to a User Equipment providing these enhanced capabilities as long as network operators did not provide this additional feature, and network operators were not incited to provide the additional MBMS features until a sufficiently large number of subscribers were known to use such enhanced User Equipments.

A further drawback of the MBMS system is related to the transmission efficiency: As network cells tend to become smaller and smaller (due to higher required data transmission bandwidths), less and less subscribers (and hence User Equipments) tend to be within reach of one base station entity such that two or more subscribers require the transmission of identical traffic data at the same time. In this case the transmission efficiency of the MBMS system is such that it is usually more effective to realize two dedicated (independent) point-to-point transmissions instead of a multicast transmission to the two User Equipments. Therefore, the probability of the MBMS system being able to be efficiently used tends to decrease (as it is less likely that three (or more) User Equipments require an identical content simultaneously). Furthermore, MBMS usually uses a static definition of radio parameters (especially the transmission power, type of modulation or type of coding) which means that the flexibility of the transmission is reduced and hence a certain Quality-of-Service (also for those User Equipments having reduced reception conditions) cannot be provided. Nevertheless the situation in a cell may occur with 3 or even more users requesting the same content.

### SUMMARY

An object of the present invention is to overcome - at least partly - the limitations of the current state of the art, and to provide a more flexible possibility of efficiently using the radio resources within a radio network cell and also a solution that
-- does not need any additional hardware capability at least on the side of the subscriber's User Equipment such that all User Equipments in compliance with at least the Universal Mobile Telecommunication System (UMTS) standard (according to Third Generation Partnership Project (3GPP) Release-6 or higher) can be used in connection with the present invention, and that
-- minimizes the additional requirements on the network side, especially of the base station entity (i.e. the NodeBs or eNodeBs) and/or of further entities (such as the Radio Network Controller (RNC)) of the access network or the core network of the public land mobile network.

The object of the present invention is achieved by a method for the transmission of data within a public land mobile network from a base station entity to a first User Equipment and to at least a second User Equipment, wherein for the transmission to the first User Equipment and to the second User Equipment, a Shared Control Channel comprising a plurality of first sub-channels and a Physical Downlink Shared Channel comprising a plurality of second sub-channels are used, wherein each second sub-channel which is used for the downlink transmission of data to one of the first User Equipment or the second User Equipment is referenced by a first sub-channel out of the plurality of first sub-channels of the Shared Control Channel, wherein for the downlink transmission of identical content data to both the first User Equipment and the second User Equipment:
-- for the downlink transmission of the identical content data to the first User Equipment, a first sub-channel of the plurality of first sub-channels of the Shared Control Channel provides a reference to a subset of second sub-channels, the subset comprising one second sub-channel or a plurality of second sub-channels of the Physical Downlink Shared Channel, and
-- for the downlink transmission of the identical content data to the second User Equipment, a further first sub-channel of the plurality of first sub-channels of the Shared Control Channel provides a reference to the identical subset of second sub-channels of the Physical Downlink Shared Channel.

In HSDPA Systems (High Speed Data Packet Access systems), traffic data are transmitted via a (traffic data) downlink channel (i.e. in the direction from the base station entity to the User Equipments) shared by a plurality of User Equipments within a network cell. This (traffic data) downlink channel is called Physical Downlink Shared Channel or High Speed-Physical Downlink Shared Channel (HS-PDSCH) and comprises a plurality of sub-channels; these sub-channels are hereinafter also called "second sub-channels". The use of the (High Speed-) Physical Downlink Shared Channel is complemented by the use of a downlink signalling channel which is also shared by the plurality of User Equipments within the network cell. This (downlink) signalling (or signalisation) channel is called Shared Control Channel or High Speed Shared Control Channel (HS-SCCH) and comprises a plurality of sub-channels; these sub-channels are hereinafter also called "first sub-channels".

A scheduler element within the base station entity is involved in deciding which data packets are sent to which User Equipment at which time (within a predetermined set of Transmission Time Intervals, TTI). The use of the (HS-) Shared Control Channel as well as of the (HS-) Physical Downlink Shared Channel by the transmitter of the base station entity is then determined by the decision of the scheduler element. By means of the (HS-) Shared Control Channel, the User Equipments are informed which User Equipment will be the destination of a data packet transmitted within a certain Transmission Time Interval. In case that within one Transmission Time Interval (traffic) data are sent to a plurality of User Equipments, then a distinct (first) sub-channel of the (HS-) Shared Control Channel is used for every User Equipment in order to inform that User Equipment about which (second) sub-channel of the (HS-) Physical Downlink Shared Channel carries the (traffic) data for this User Equipment.

According to the present invention, it is advantageously possible that a first sub-channel and a further first sub-channel (i.e. more than one first sub-channel of the group of first sub-channels of the Shared Control Channel) refer to the same second sub-channel or the same group of second sub-channels (i.e. the same subset of second sub-channels of the group of second sub-channels of the Physical Downlink Shared Channel). Thereby, it is advantageously possible that such identical data are transmitted only once for both the first User Equipment and the second User Equipment. This means that more than one User Equipment receive that identical content data by means of only one emission of that identical content data over the radio interface.

In practice, the first sub-channel referring to a second sub-channel and a further first sub-channel referring to the same second sub-channel (or the same group of second sub-channels, i.e. the same subset of the second sub-channels of the Physical Downlink Shared Channel) is realized by means of
-- transmitting (or mapping) an identifier of the first User Equipment on the first sub-channel (of the plurality of first sub-channels of the Shared Control Channel) so that this mapping on the first sub-channel indicates the transmission of content data to the first User Equipment on the subset of the second sub-channels, and
-- transmitting (or mapping) an identifier (i.e. a further identifier) of the second User Equipment on the further first sub-channel (of the plurality of first sub-channels of the Shared Control Channel) so that this mapping on the further first sub-channel indicates the transmission of the identical content data to the second User Equipment on the (identical) subset of the second sub-channels.

Thereby, a multicast transmission is realized. It is evident that according to the present invention, it is possible to use more than two User Equipments receiving the identical content data (especially multimedia data or other data such as news, video data, telephone conference data where at least two subscribers are located within the same radio cell or the like). E.g., it is possible to transmit identical content data to three User Equipments by means of using three different first sub-channels pointing or referencing one and the same subset of second sub-channels of the Physical Downlink Shared Channel. Furthermore, it is possible to transmit identical content data to four User Equipments by means of using four different first sub-channels pointing or referencing one and the same subset of second sub-channels of the Physical Downlink Shared Channel.

It is advantageous according to the present invention that radio resources can be saved (or used for other dedicated connections or for multicast transmissions related to other (identical) contents to other User Equipments) that would otherwise be needed for transmitting such identical content data to the two, or three, or four or even more User Equipments in a dedicated manner. Thereby, it is, e.g., possible to provide services like mobile television applications with reduced radio resource requirements, hence with lower network installation costs. According to the present invention, the radio parameters (especially the transmission power, type of modulation or type of coding) of the common radio transmission of the identical content data (especially regarding the Physical Downlink Shared Channel) need to be adapted for the one User equipment having the worst reception conditions. This requires no additional radio resources to serve User Equipments with better reception conditions, and it requires even less radio resources than a broadcast transmission where a User Equipment should be able to receive this broadcast transmission correctly even in the most distant edge of the radio cell. According to the present invention, it is possible to dynamically allocate (radio transmission) resources to meet the transmission demand related to identical content data within a radio cell. Thereby, the enhanced flexibility of a unicast infrastructure enabling point-to-point transmission can be combined with the advantage of higher efficiency of a broadcast infrastructure for providing identical content to a group of users. Furthermore, subscribers can continue to use their Universal Mobile Telecommunication System (UMTS) User Equipments without the necessity to exchange their hardware to use such functionality.

According to the present invention, it is preferred that the decision whether a transmission in the multicast mode is to be initiated (involving at least the first User Equipment and the second User Equipment), is taken by the base station entity.

According to the present invention, the scheduler element is able to flexibly allocate the available radio resources to the transmissions requested by the different User Equipments within the radio cell.

The invention is described based on a Universal Mobile Telecommunication System (UMTS) public land mobile network and the signalling mechanisms according to the Third Generation Partnership Project (3GPP) Release-6 standard. However, the application of the present invention is not restricted to the use of Universal Mobile Telecommunication System (UMTS) / High Speed Data Packet Access (HSDPA) but can also be applied to public land mobile networks according to other standards such as especially the Long Term Evolution (LTE) standard.

According to the present invention, it is preferred that the downlink transmission of data to the first and second User Equipment is realized according to a HSDPA- technology (High Speed Downlink Packet Access).

According to the present invention, it is furthermore preferred that the Shared Control Channel is a HS-SCCH (High Speed Shared Control Channel), and/or that the Physical Downlink Shared Channel is a HS-PDSCH (High Speed Physical Downlink Shared Channel).

Thereby, it is advantageously possible to effectively use a commonly available standard established within a plurality of public land mobile networks.

It is furthermore preferred according to the present invention that the reference provided by the first sub-channels of the Shared Control Channel points to a specific TTI (Transmission Time Interval).

Thereby, it is easily and effectively possible to provide a well-defined indication on the transmission time interval to the User Equipments.

According to the present invention, it is still furthermore preferred that a Dedicated Physical Control Channel, especially a HS-DPCCH (High Speed Dedicated Physical Control Channel), is used for the transmission of uplink control data from the first User Equipment and the second User Equipment to the base station entity.

Thereby, it is advantageously possible according to the present invention that the scheduler element is able to receive an information about the quality of the downlink radio channel (CQI, Channel Quality Information) to every User Equipment and determines the parameter settings for the multicast transmission from this information.

According to the present invention, it is furthermore preferred that the base station entity initiates the first sub-channel pointing to the same subset of second sub-channels as the further first sub-channel in case that both the first and the second User Equipment are to receive the identical content data.

Thereby, it is advantageously possible to provide a very flexible realization of a multicast transmission of identical content data to a plurality of different User Equipments (in case such a plurality of different User Equipments exist in the same radio cell and requesting the identical content data), and also to flexibly modify the transmission such that no multicast transmission is realized (but a unicast transmission) in case that only one User Equipment requests the content data within the radio cell.

The present invention further relates to a public land mobile network providing the transmission of data from a base station entity to a first User Equipment and to at least a second User Equipment, wherein the public land mobile network is configured to use a Shared Control Channel comprising a plurality of first sub-channels and a Physical Downlink Shared Channel comprising a plurality of second sub-channels for the transmission to the first User Equipment and to the second User Equipment, wherein each second sub-channel which is used for the downlink transmission of data to one of the first User Equipment or the second User Equipment is referenced by a first sub-channel out of the plurality of first sub-channels of the Shared Control Channel, wherein the public land mobile network is provided such that for the downlink transmission of identical content data to both the first User Equipment and the second User Equipment:
-- for the downlink transmission of the identical content data to the first User Equipment, a first sub-channel of the plurality of first sub-channels of the Shared Control Channel provides a reference to a subset of second sub-channels, the subset comprising one second sub-channel or a plurality of second sub-channels of the Physical Downlink Shared Channel, and
-- for the downlink transmission of the identical content data to the second User Equipment, a further first sub-channel of the plurality of first sub-channels of the Shared Control Channel provides a reference to the identical subset of second sub-channels of the Physical Downlink Shared Channel.

The invention furthermore relates to a base station entity providing the transmission of data from a public land mobile network to a first User Equipment and to at least a second User Equipment, wherein the base station entity is configured to use a Shared Control Channel comprising a plurality of first sub-channels and a Physical Downlink Shared Channel comprising a plurality of second sub-channels for the transmission to the first User Equipment and to the second User Equipment, wherein each second sub-channel which is used for the downlink transmission of data to one of the first User Equipment or the second User Equipment is referenced by a first sub-channel out of the plurality of first sub-channels of the Shared Control Channel, wherein the base station entity is provided such that for the downlink transmission of identical content data to both the first User Equipment and the second User Equipment:
-- for the downlink transmission of the identical content data to the first User Equipment, a first sub-channel of the plurality of first sub-channels of the Shared Control Channel provides a reference to a subset of second sub-channels, the subset comprising one second sub-channel or a plurality of second sub-channels of the Physical Downlink Shared Channel, and
-- for the downlink transmission of the identical content data to the second User Equipment, a further first sub-channel of the plurality of first sub-channels of the Shared Control Channel provides a reference to the identical subset of second sub-channels of the Physical Downlink Shared Channel.

Such a public land mobile network and such a base station entity have the advantage that it is effectively possible to provide a flexible multicast transmission to more than one User Equipment within a radio cell.

According to the present invention, it is especially advantageous that the base station entity is a NodeB for a Universal Mobile Telecommunication System (UMTS) Terrestrial Radio Access Network (UTRAN) or an eNodeB for an Evolved Universal Mobile Telecommunication System (UMTS) Terrestrial Radio Access Network (E-UTRAN).

Furthermore, it is preferred according to the present invention that the base station entity comprises a scheduler element, wherein the scheduler element controls both the Shared Control Channel and the Physical Downlink Shared Channel.

Additionally, the present invention relates to a program comprising a computer readable program code for executing an inventive method or for configuring or controlling an inventive base station entity or an inventive public land mobile network.

### BRIEF DESCRIPTION OF THE DRAWINGS

Figure 1 schematically illustrates a cellular public land mobile network comprising at least one radio cell, a base station entity and at least a first and a second User Equipment.

Figure 2 schematically illustrates a base station entity that is able to realize the method according to the present invention.

Figures 3 to 6 schematically illustrate a plurality of different transmission configurations within a radio cell.

Figure 7 schematically illustrates a signal transmission path for identical content data to be transmitted to a plurality of User Equipments simultaneously for the case of a Universal Mobile Telecommunication System (UMTS) / High Speed Data Packet Access (HSDPA) network.

Figure 8 schematically illustrates a signal transmission path for identical content data to be transmitted to a plurality of User Equipments simultaneously for the case of a Long Term Evolution (LTE) network.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

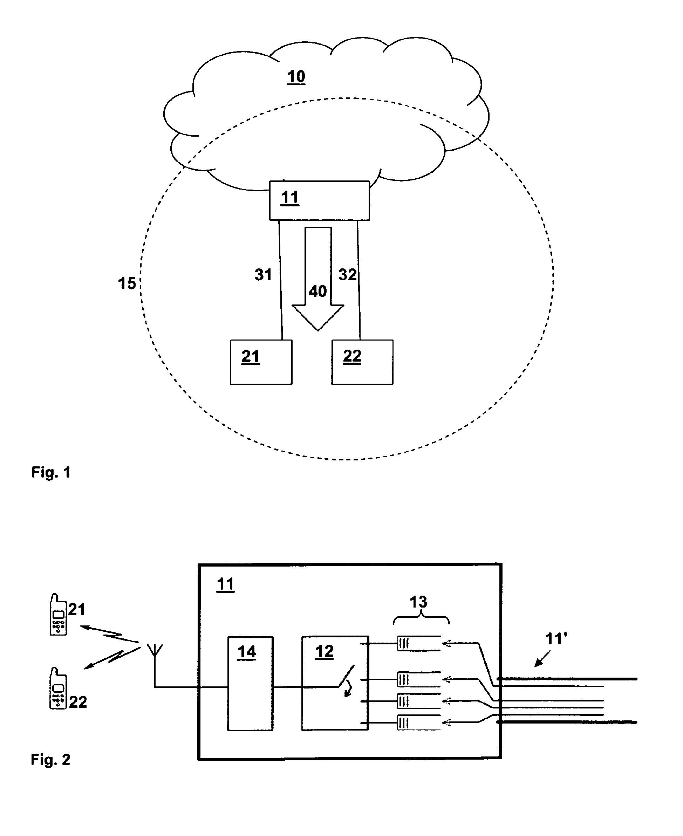

In Figure 1, a cellular public land mobile network 10 is schematically represented. The public land mobile network 10 comprises a plurality of cells, one of which is represented by means of a dashed circle and designated by reference sign 15. The cell 15 also comprises a base station entity 11, i.e. a fixed device such as a NodeB (or an eNodeB or the like) having at least one antenna means such that radio coverage within the cell 15 is provided. Within the coverage area of the cell 15, a first User Equipment 21 and a second User Equipment 22 are schematically illustrated. Usually, a cell 15 comprises a plurality of identical or different User Equipments such as the first and second User Equipments 21, 22.

According to the present invention, for the transmission of data from the base station entity 11 to the first User Equipment 21 and to the second User Equipment 22, a Shared Control Channel 30 and a Physical Downlink Shared Channel 40 is provided. The Shared Control Channel 30 comprises first sub-channels 31, 32 and the Physical Downlink Shared Channel 40 comprises second sub-channels, not depicted in Figure 1.

In Figure 2, a base station entity 11 that is able to realize the method according to the present invention is schematically shown. The base station entity 11 is preferably a NodeB of a Universal Mobile Telecommunication System (UMTS) / High Speed Data Packet Access (HSDPA) network or an eNodeB of a Long Term Evolution (LTE) system. According to the present invention, the base station entity 11 comprises a scheduler element 12, a signal processing element 14, especially for generating the radio frequency signals to be emitted by an antenna means of the base station entity 11. The base station entity 11 furthermore comprises a plurality of input queues 13. Data (to be emitted to the User Equipments 21, 22) that are incoming to the base station entity 11 (from an arbitrary (content) server via a network entity of the public land mobile network such as a Radio Network Controller (RNC) or a Serving Gateway) over a suitable base station entity interface 11' (e.g. a lub Interface according to the Universal Mobile Telecommunication System (UMTS) standard or the like) are intermediately stored in the input queues 13, one input queue being allocated (or assigned) for each data connection of the User Equipments 21, 22 to be served. In the example depicted in Figure 2, three data connections are established (and hence three input queues are present) for the second User Equipment 22 and one data connection is established (and hence one input queue is present) for the first User Equipment 21. The scheduler 12 decides which data packet (of one of the queues 13) is sent at which Transmission Time Interval and using which number of second sub-channels of the Physical Downlink Shared Channel 40 to which User Equipment 21, 22. This decision afterwards controls the signal processing and the generation of the radio frequency signals.

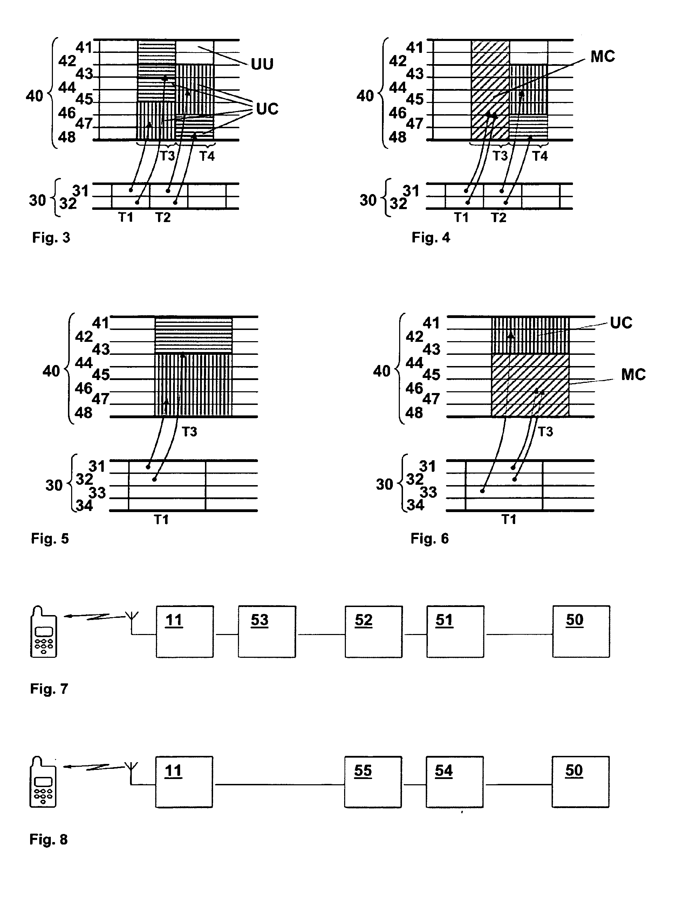

In Figures 3 to 6, a plurality of different transmission configurations within a radio cell are represented schematically. Each of these Figures 3 to 6 shows the Shared Control Channel 30, the Physical Downlink Shared Channel 40 as well as the first sub-channels 31, 32, 33, 34 and the second sub-channels 41, 42, 43, 44, 45, 46, 47, 48. Both the Shared Control Channel 30 and the Physical Downlink Shared Channel 40 are organized in time intervals, also called Transmission Time Intervals (TTI). A first Transmission Time Interval is represented by reference sign T1, a second Transmission Time Interval is represented by reference sign T2, a third Transmission Time Interval is represented by reference sign T3, and a fourth Transmission Time Interval is represented by reference sign T4. Conventionally according to the High Speed Data Packet Access (HSDPA) standard, the first Transmission Time Interval T1 corresponds to (or references) the third Transmission Time Interval T3 and the second Transmission Time Interval T2 corresponds to (or references) the fourth Transmission Time Interval T4. This means that the reference information regarding the allocation of the second sub-channels 41 - 48 (of the Physical Downlink Shared Channel 40) in the third Transmission Time Interval T3 is transmitted on the first sub-channels 31, 32, 33, 34 (of the Shared Control Channel 30) in the first Transmission Time Interval T1, and that the reference information regarding the allocation of the second sub-channels 41, ..., 48 (of the Physical Downlink Shared Channel 40) in the fourth Transmission Time Interval T4 is transmitted on the first sub-channels 31, 32, 33, 34 (of the Shared Control Channel 30) in the second Transmission Time Interval T2. E.g. according to the High Speed Data Packet Access (HSDPA) standard, the Transmission Time Interval of the Shared Control Channel 30 starts 1,67 ms earlier than the corresponding Transmission Time Interval of the Physical Downlink Shared Channel 40. The first sub-channels 31, 32, 33, 34 serve to inform the User Equipments 21, 22 (i.e. the first User Equipment 21 or the second User Equipment 22 respectively) that data are transmitted for them on a subset of the second sub-channels 41, ..., 48 (i.e. on one of the second sub-channels 41, ..., 48 or on a plurality of the second sub-channels 41, ..., 48). By means of using one first sub-channel 31 (out of the plurality of first sub-channels 31, 32, 33, 34) and one time interval, this transmission of information is done for one single User Equipment (i.e. in the context of the present example either the first User Equipment 21 or the second User Equipment 22). This transmission of information is performed by mapping an identifier (that is specific for the addressed User Equipment in question, i.e. a first identifier specifically addressing the first User Equipment 21 and a second identifier specifically addressing the second User Equipment 22) on the respective first sub-channel 31 (out of the plurality of first sub-channels 31, 32, 33, 34). Likewise, the other first sub-channels (e.g. the further first sub-channel 32) out of the plurality of first sub-channels 31, 32, 33, 34 can address another User Equipment (e.g. the second User Equipment 22).

More specifically, Figure 3 illustrates the case where:
-- on the first sub-channel 31 (of the Shared Control Channel 30) and during the first Transmission Time Interval T1, it is indicated (to a specific User Equipment, e.g. the second User Equipment 22) that the traffic data to be used are transmitted in the second sub-channels 46 to 48 (of the Physical Downlink Shared Channel 40) and during the third Transmission Time Interval T3 (hatched vertically);
-- on the further first sub-channel 32 (of the Shared Control Channel 30) and during the first Transmission Time Interval T1, it is indicated (to a specific User Equipment, e.g. the first User Equipment 21) that the traffic data to be used are transmitted in the second sub-channels 41 to 45 (of the Physical Downlink Shared Channel 40) and during the third Transmission Time Interval T3 (hatched horizontally);
-- on the first sub-channel 31 (of the Shared Control Channel 30) and during the second Transmission Time Interval T2, it is indicated (to a specific User Equipment, e.g. the second User Equipment 22) that the traffic data to be used are transmitted in the second sub-channels 43 to 46 (of the Physical Downlink Shared Channel 40) and during the fourth Transmission Time Interval T4 (hatched vertically);
-- on the further first sub-channel 32 (of the Shared Control Channel 30) and during the second Transmission Time Interval T2, it is indicated (to a specific User Equipment, e.g. the first User Equipment 21) that the traffic data to be used are transmitted in the second sub-channels 47 to 48 (of the Physical Downlink Shared Channel 40) and during the fourth Transmission Time Interval T4 (hatched horizontally).
This results in two unicast transmissions (UC) in the third and fourth Transmission Time Interval T3 and T4, wherein in the fourth Transmission Time Interval T4, the second sub-channels 41 and 42 are unused (UU).

More specifically, Figure 4 illustrates the case where:
-- on the first sub-channel 31 (of the Shared Control Channel 30) and during the first Transmission Time Interval T1, it is indicated (to a specific User Equipment, e.g. the first User Equipment 21) that the traffic data to be used are transmitted in the second sub-channels 41 to 48 (of the Physical Downlink Shared Channel 40) and during the third Transmission Time Interval T3 (hatched with inclination);
-- on the further first sub-channel 32 (of the Shared Control Channel 30) and during the first Transmission Time Interval T1, it is indicated (to a specific User Equipment, e.g. the second User Equipment 22) that the traffic data to be used are transmitted in the second sub-channels 41 to 48 (of the Physical Downlink Shared Channel 40) and during the third Transmission Time Interval T3 (hatched with inclination);
-- on the first sub-channel 31 (of the Shared Control Channel 30) and during the second Transmission Time Interval T2, it is indicated (to a specific User Equipment, e.g. the second User Equipment 22) that the traffic data to be used are transmitted in the second sub-channels 43 to 46 (of the Physical Downlink Shared Channel 40) and during the fourth Transmission Time Interval T4 (hatched vertically);
-- on the further first sub-channel 32 (of the Shared Control Channel 30) and during the second Transmission Time Interval T2, it is indicated (to a specific User Equipment, e.g. the first User Equipment 21) that the traffic data to be used are transmitted in the second sub-channels 47 to 48 (of the Physical Downlink Shared Channel 40) and during the fourth Transmission Time Interval T4 (hatched horizontally).
This results in a multicast transmission (MC) of identical content data (to the first and second User Equipment 21, 22) in the third Transmission Time Interval T3, two unicast transmissions (to the first and second User Equipment 21, 22) in the fourth Transmission Time Interval T4, wherein in the fourth Transmission Time Interval T4, the second sub-channels 41 and 42 are unused.

More specifically, Figure 5 illustrates the case where:
-- on the first sub-channel 31 (of the Shared Control Channel 30) and during the first Transmission Time Interval T1, it is indicated (to a specific User Equipment, e.g. the second User Equipment 22) that the traffic data to be used are transmitted in the second sub-channels 44 to 48 (of the Physical Downlink Shared Channel 40) and during the third Transmission Time Interval T3 (hatched vertically);
-- on the further first sub-channel 32 (of the Shared Control Channel 30) and during the first Transmission Time Interval T1, it is indicated (to a specific User Equipment, e.g. the first User Equipment 21) that the traffic data to be used are transmitted in the second sub-channels 41 to 43 (of the Physical Downlink Shared Channel 40) and during the third Transmission Time Interval T3 (hatched horizontally);
-- the first sub-channels 33 and 34 being empty, i.e. indicating no further transmission for a further User Equipment in the third Transmission Time Interval T3.
This results in two unicast transmissions (one to the first User Equipment 21 and one to the second User Equipment 22) in the third Transmission Time Interval T3.

More specifically, Figure 6 illustrates the case where:
-- on the first sub-channel 31 (of the Shared Control Channel 30) and during the first Transmission Time Interval T1, it is indicated (to a specific User Equipment, e.g. the first User Equipment 21) that the traffic data to be used are transmitted in the second sub-channels 44 to 48 (of the Physical Downlink Shared Channel 40) and during the third Transmission Time Interval T3 (hatched with inclination);
-- on the further first sub-channel 32 (of the Shared Control Channel 30) and during the first Transmission Time Interval T1, it is indicated (to a specific User Equipment, e.g. the second User Equipment 22) that the traffic data to be used are transmitted in the second sub-channels 44 to 48 (of the Physical Downlink Shared Channel 40) and during the third Transmission Time Interval T3 (hatched with inclination);
-- on a still further first sub-channel 33 (of the Shared Control Channel 30) and during the first Transmission Time Interval T1, it is indicated (to a specific User Equipment, e.g. a third User Equipment (not represented by means of a reference sign)) that the traffic data to be used are transmitted in the second sub-channels 41 to 43 (of the Physical Downlink Shared Channel 40) and during the third Transmission Time Interval T3 (hatched vertically);
-- another (designated by reference sign 34) of the first sub-channels being empty, i.e.
indicating no further transmission for a further User Equipment in the third Transmission Time Interval T3.
This results in one unicast transmission (UC) (to the third User Equipment) in the third Transmission Time Interval T3 and one multicast transmission (MC) (to both the first User Equipment 21 and the second User Equipment 22) in the third Transmission Time Interval T3.

In summary, this means that on the first sub-channels 31, 32, 33, 34 of the Shared Control Channel 30 information is transmitted indicating:
-- for which User Equipments 21, 22 data on the second sub-channels 41 to 48 of the Physical Downlink Shared Channel 40 are intended, wherein it is also indicated:
-- the size of the data volume transmitted on the second sub-channels 41 to 48 of the Physical Downlink Shared Channel 40,
-- which transmission parameters (especially the type of the modulation and the type of the used coding) are used, and
-- where the data are located on the Physical Downlink Shared Channel 40 (i.e. on which subset of the second sub-channels 41 to 48).
In order to provide for such a functionality, all User Equipments 21, 22 receive (the first sub-channels 31, 32, 33, 34 of) the Shared Control Channel 30, and the User Equipment 21, 22 indicated on one of the first sub-channels 31, 32, 33, 34 afterwards also reads the indicated second sub-channel (or plurality of second sub-channels) of the Physical Downlink Shared Channel 40. This means that the Physical Downlink Shared Channel 40 provides the data transmission and the Shared Control Channel 30 serves as an indicator which data are intended to be received by which User Equipment 21, 22 (and also how the signal processing of the data received on the Physical Downlink Shared Channel 40 is to be performed).

It is possible to provide for a plurality of first sub-channels (of a Shared Control Channel 30). According to the Third Generation Partnership Project (3GPP) specification, a User Equipment 21, 22 is required to listen to at least four (4) Shared Control Channel sub-channels (i.e. to at least four first sub-channels) at a given time (or Transmission Time Interval). Then, the scheduler element is able to allocated in each Transmission Time Interval the available resources of the Physical Downlink Shared Channel 40, adapt the emission power level as well as the channelization codes to be applied for the data transmitted by the second sub-channels of the Physical Downlink Shared Channel 40.

According to the present invention, a multicast transmission (i.e. a downlink transmission of identical content data to both the first User Equipment 21 and at least the second User Equipment 22) is realized by means of referencing the same subset of second sub-channels of the Physical Downlink Shared Channel 40 towards both the first and the second User Equipment 21, 22 by means of using (at least) two different first sub-channels of the Shared Control Channel 30 (each User Equipment involved requiring one first sub-channel). The identical data (to be transmitted simultaneously) are transmitted only once to a plurality of User Equipments 21, 22. Therefore, radio resources that would otherwise be used for a multiple transmission of these identical data can be saved and used for transmission of other data.

In the context of the present invention, it is preferred that
-- the User Equipment specific encryption (usually applied within a Universal Mobile Telecommunication System (UMTS) public land mobile network) is switched off for the a.m. downlink transmission of identical data. However, the transmitted data can comprise a content encryption (such as e.g. known from pay TV applications) between a (broadcast) server and the User Equipment 21, 22 such that an unauthorized access of a third party can be avoided; and
-- the scheduler element 12 assures that the emission power level and other emission parameters (for the signal processing) are chosen such that all User Equipments 21, 22 involved in the multicast transmission receive the identical content data with a sufficient reliability; i.e. the scheduler element 12 needs to chose these parameters such that the User Equipment 21, 22 having the worst reception conditions and/or terminal specifications (such
as the High Speed Data Packet Access (HSDPA) category) is able to receive, demodulate and decode the transmitted signal.

In the following, some situations are exemplarily discussed with respect to the present invention, namely:
-- the establishment of the multicast connection,
-- the data transmission from a server to one User Equipment or more User Equipments,
-- the end of the multicast connection, and
-- the change of network cell of a User Equipment involved in a multicast connection.

Establishment of the multicast connection

Regarding the establishment of the multicast connection, it is preferred according to the present invention that the public land mobile network (preferably a GGSN entity of the core network of the public land mobile network) recognises that a connection for multicast enabled data could be used. This should be signalled to the RNC (Radio Network Controller). In the RNC, the User Equipment specific encryption should be switched off. The RNC informs the base station entity 11 (e.g. the NodeB) during the connection establishment that a multicast enabled connection is concerned. (Alternatively, this can also be signalled during the data transmission). This means that the decision whether a transmission in the multicast mode is to be initiated (involving at least the first User Equipment and the second User Equipment), is taken by the base station entity 11. Preferably, the multicast transmission (or the establishment of the multicast connection) is only initiated by the base station entity 11 in case that identical content data are to be transmitted to a plurality of User Equipments (in the same radio cell). Thereby, the multicast transmission is initiated in case that more than one User Equipment wants to receive these data.

The indication that a connection for multicast enabled data should be used can be carried via the RANAP (Radio Access Network Application Part) according to the Third Generation Partnership Project (3GPP) specification 25.413 (requiring no changes with the signalization messages according to the RANAP protocol). In case that the User Equipment has already established a RRC-connection (Radio Resource Control) to the RNC and that part of the RAB-IDs (Radio Access Bearer IDs) is reserved for multicast services, then it is possible according to the present invention to use these reserved RAB-IDs for the multicast transmissions. The Third Generation Partnership Project (3GPP) specification 25.413 provides values from 0 to 255 for the RAB-IDs; therefore, it would be possible to reserve the values 241 to 255 for multicast transmissions. In the context of the present invention, it is preferred that for each multicast service a dedicated RAB-ID is used and is known in the GGSN entity as well as in the RNC.
In case a User Equipment requests a service that can be used for multicast emission, an end-to-end connection is established from the User Equipment to the respective server for this service. The GGSN entity verifies whether a multicast service (and if yes which multicast service, e.g. based on the Internet Protocol address or the access point name (APN)) is requested and assigns the related RAB-ID. The RNC knows that this RAB-ID is intended for a multicast-service and triggers the deactivation of the encryption on the air interface (especially by means of a RRC Security Mode Command).
Alternatively to this scenario, the RNC could also deactivate the encryption on the air interface in case that two or more User Equipments within the same radio cell request the same content data. This can be detected by means of two or more Universal Mobile Telecommunication System (UMTS) bearers having the same RAB-ID from the value range reserved for multicast transmission. The advantage thereof is that a deactivation of the encryption occurs less often but has the drawback of a slightly higher complexity. Optionally, the RNC could inform the NodeB (e.g. via the lub-Interface) that the connection (in progress to be established) should be used for multicast enabled data. For that to realize, the signalling messages provided by the NBAP protocol (within Third Generation Partnership Project (3GPP) specification 25.433) can be sent from the RNC to the NodeB (for the procedures Radio Link Setup, Radio Link Addition, and perhaps also Synchronized Radio Link Reconfiguration and Unsynchronized Radio Link Reconfiguration) and be enhanced by a proprietary information element by which the RNC informs the NodeB about the RAB-ID. As the RNC, the NodeB is able to recognize that multicast enabled data are concerned.

Data transmission from a server to one User Equipment or more User Equipments

According to the present invention, it is the task of the base station entity 11 (e.g. a NodeB) to detect the situation that two or more subscribers, i.e. User Equipments, are located within the same radio cell at the same time and requesting the identical data simultaneously. Therefore, a plurality of alternatives exist according to the present invention:
-- in case that the RNC informed the NodeB (for example during the establishment of the data connection) that the connection can be used for multicast enabled data, then the NodeB has to recognize whether there exist at least two User Equipments (and if yes which User Equipments) requesting the identical data, based on the RAB-ID contained, e.g., in the NBAP signalling messages;
-- the RNC can label the data frames related to the HS-DSCH (High Speed Downlink Shared Channel) on the IuB interface such that the NodeB recognizes such data frames as comprising multicast enabled data and to which broadcast service these data belong. The transmission of data from the RNC to the NodeB via the IuB Interface is specified in the Third Generation Partnership Project (3GPP) document 25.435. The structure of the HS-DSCH data frames comprises 4 spare bits per MAC-d-PDU. These spare bits can be used for transmitting the RAB-ID to the NodeB, e.g. by inserting the relevant part of the RAB-ID (lower four bits of one byte, i.e. "value of RAB-ID less 240") in the first MAC-d-PDU. Then unicast connections are represented by a value "0" whereas other values up to 15 represent multicast channels. The advantage of this alternative is that it is completely Third Generation Partnership Project (3GPP) compatible and does not need proprietary enhancements of the NBAP signalling messages.

The scheduler element 12 controls the data transmission of unicast and multicast connections as previously described, with the following peculiarities regarding the multicast connections:

Due to the fact that the RNC has established a connection for each receiving User Equipment 21, 22 of a multicast transmission, and as the RNC also transmits these data to the NodeB, the multicast data are received by the NodeB at least twice. The scheduler element 12 only serves the queue of one of these multicast receiving User Equipments. The additional incoming duplications of the data to transmit within the multicast transmission need not to be saved in the queue but can be deleted at the reception by the NodeB. It is possible according to the present invention that the scheduler simply ignores such an empty queue.

The transmission parameters (such as transmission power level, number of Physical Downlink Shared Channel channelization codes, modulation and coding pattern) are to be chosen such that all the User Equipments of the multicast transmission are able to use the received signals. According to the present invention, there are different possibilities to provide such an adjustment:
-- it is possible to use transmission parameters that are predefined statically by the network operator (Operations & Maintenance);
-- in case that the scheduler element 12 is provided with information about the current quality of the downlink radio channels (e.g. by means of the Channel Quality Information, CQI, received by the User Equipments), and the High Speed Data Packet Access (HSDPA) Terminal category of all involved User Equipments, it is possible that the scheduler element bases the choice of the transmission parameters on the least quality of a transmission channel and on the lowest or minimal category of an involved User Equipment.
In the second alternative, the radio resources are used more effectively but probably the first of these alternatives would be easier to implement.

Once the transmission parameters are defined, the scheduler element 12 provides for the transmission of the information to each of the involved User Equipments, on which second sub-channels (or subset of second sub-channels) of the Physical Downlink Shared Channel the identical data will be transmitted. This is done by means of one first sub-channel of the Shared Control Channel for each involved User Equipment.

According to the present invention, it is possible that a User Equipment involved in a multicast transmission also receives other data related to a unicast transmission. According to High Speed Data Packet Access (HSDPA), it is not allowed to send, within one Transmission Time Interval and to one User Equipment data related to two different queues; therefore: in case that the scheduler elements causes the transmission of data related to a multicast transmission during one Transmission Time Interval, the data related to a unicast transmission for a User Equipment involved in the multicast transmission will be sent in another Transmission Time Interval.

The High Speed Data Packet Access (HSDPA) protocol provides a so-called HARQ (Hybrid automatic repeat request) mechanism for the correction of errors related to the transmission of data. According to the Third Generation Partnership Project (3GPP) specification 25.321, a User Equipment sends a negative acknowledgement message (NACK) to the base station entity 11 in case that erroneous data are received. After reception of such a negative acknowledgement message, the scheduler element 12 within the base station entity 11 decides about when and how information regarding error correction are sent to the User Equipment concerned. This HARQ mechanism (or a variation of such a HARQ mechanism used, e.g., in connection with a Long Term Evolution (LTE) system) can also be used with regard to the multicast functionality according to the present invention. In such a situation, it is preferred according to the present invention that (transmission) error correction information are only sent to those User Equipments that are concerned, i.e. that have reported errors.

It is furthermore preferred according to one embodiment (of the transmission of such error correction information) that (in case that a multitude of User Equipments are concerned, i.e. require error correction information that is identical) such a kind of error correction information is also transmitted by using the method of (multicast) transmission of data according to the present invention. In this respect, it is furthermore preferred (as it improves the efficient use of the available radio resources) (but not necessarily mandatory according to the present invention) that such a multicast transmission (of identical error correction information) is only directed to those User Equipments (within the group of User Equipments involved in the multicast transmission of the identical contend data) that have reported errors (e.g. by means of NACK messages), i.e. those User Equipments involved in the multicast transmission of content data that do not report transmission (or other) errors, are not included in the multicast transmission of the error correction information.

In another alternative embodiment (of the transmission of such error correction information), the error correction information is transmitted to the User Equipment by means of a unicast transmission. Thereby, it is advantageously possible that different error correction information are sent individually to different User Equipments, e.g. dependent on the "quality of downlink radio channels" (CQI, Channel Quality Information) signalled by such different User Equipments.

End of the multicast connection

In case that one queue is to be deleted within the NodeB, the NodeB verifies by means of the RAB-ID whether this queue is used by a multicast enabled data connection. If not, the usual High Speed Data Packet Access (HSDPA) disconnection procedure is followed. If, however, the queue is used for a multicast related data connection, the following activities are required:
-- firstly, the scheduler element 12 needs to be informed that the respective User Equipment does no longer participate at the multicast transmission;
-- furthermore, in case that the User Equipment to be deleted from the multicast transmission is the one that is related to the activated queue for the multicast transmission data (i.e. the queues of the other User Equipments participating at the multicast transmission have emptied queues), the unsent data of the active queue has to be transferred to another queue (to be activated); the scheduler element is instructed to serve the new activated queue and the previous active queue will be deleted as soon as it is empty (i.e. as soon as all data are sent). Thereby, it is ensured that no data are lost during that process.

Within the RNC and within the other entities of the core network, the termination of a multicast enabled connection is not different from the termination of a unicast connection.

Optionally, the RNC can reactivate the User Equipment specific encryption by means of a RRC Security Mode Command (especially in case that the User Equipment maintains further unicast connections after disconnecting from the multicast connection.

Change of network cell of a User Equipment involved in a multicast connection

In case a User Equipment changes the radio cell during a multicast connection, the respective data connections are disconnected in the old radio cell and re-established in the new radio cell as previously described. The change of the radio cell can result in a temporary interruption of the data transmission and hence the broadcast service.

The realization of the present invention within the context of a Long Term Evolution (LTE) system differs from the implementation within a High Speed Data Packet Access (HSDPA) system insofar as especially the RNC is omitted in a Long Term Evolution (LTE) system and the functionality relevant with respect to the present invention which is provided by the RNC is shifted to the NodeB. The function of the packet data network (PDN) gateway (in the Long Term Evolution (LTE) system) is comparable to that of the GGSN of a High Speed Data Packet Access (HSDPA) system. Long Term Evolution (LTE) uses the same principle for providing data transmission via a shared channel (Physical Downlink Shared Channel and Shared Control Channel. The main differences between the realization of the present invention within a High Speed Data Packet Access (HSDPA) system and a Long Term Evolution (LTE) system is that the interface between the RNC and the NodeB is omitted in Long Term Evolution (LTE) and that other protocols are used for the data transmission between the PDN Gateway and the NodeB or eNodeB.

In Figure 7, a signal transmission path for identical content data to be transmitted to a plurality of User Equipments simultaneously for the case of a Universal Mobile Telecommunication System (UMTS) / High Speed Data Packet Access (HSDPA) network is schematically shown. Within a High Speed Data Packet Access (HSDPA) system, the signal is generated, e.g., by means of a server 50 such as a broadcast server 50, transmitted to the GGSN (Gateway General Packet Radio System (GPRS) Support Node) 51, to the Serving GPRS Support Node (SGSN) 52, to the RNC 53 and to the NodeB or base station entity 11.

In Figure 8, a signal transmission path for identical content data to be transmitted to a plurality of User Equipments simultaneously for the case of a Long Term Evolution (LTE) network is schematically shown. Within a Long Term Evolution (LTE) system, the signal is generated, e.g., by means of the server 50 such as the broadcast server 50, transmitted to the PDN Gateway 54, to the Serving Gateway 55 and to the eNodeB or base station entity 11.

## Claims

1. Method for the transmission of data within a public land mobile network (10) from a base station entity (11) to a first User Equipment (21) and to at least a second User Equipment (22), wherein for the transmission to the first User Equipment (21) and to the second User Equipment (22), a Shared Control Channel (30) comprising a plurality of first sub-channels (31, 32) and a Physical Downlink Shared Channel (40) comprising a plurality of second sub-channels (41, ..., 48) are used, wherein each second sub-channel which is used for the downlink transmission of data to one of the first User Equipment (21) or the second User Equipment (22) is referenced by a first sub-channel (31, 32) out of the plurality of first sub-channels (31, 32) of the Shared Control Channel (30), wherein for the downlink transmission of identical content data to both the first User Equipment (21) and the second User Equipment (22):
-- a subset of the second sub-channels (41, ..., 48) is used to transmit the identical content data simultaneously to both the first User Equipment (21) and the second User Equipment (22), the subset of the second sub-channels (41, ..., 48) comprising one second sub-channel or a plurality of second sub-channels of the Physical Downlink Shared Channel (40),
-- an identifier of the first User Equipment (21) is mapped to a first sub-channel (31) of the plurality of first sub-channels (31, 32) of the Shared Control Channel (30) so that this first sub-channel (31) indicates the transmission of the identical content data to the first User Equipment (21) on the subset of the second sub-channels (41, ..., 48), and
-- an identifier of the second User Equipment (22) is mapped to a further first sub-channel (32) of the plurality of first sub-channels (31, 32) of the Shared Control Channel (30) so that this further first sub-channel (32) indicates the transmission of the identical content data to the second User Equipment (22) on the subset of the second sub-channels (41, ..., 48), and
-- the first sub-channel (31) points to the same subset of the second sub-channels (41, ... , 48) as the further first sub-channel (32).

2. Method according to claim 1, wherein the first User Equipment (21) and the second User Equipment (22) are both located within the same radio cell (15) or segment of a radio cell.

3. Method according to claim 1 or 2, wherein the downlink transmission of data to the first and second User Equipment (21, 22) is realized according to a HSDPA- technology (High Speed Downlink Packet Access).

4. Method according to one of the preceding claims, wherein the Shared Control Channel (30) is a HS-SCCH (High Speed Shared Control Channel), and/or wherein the Physical Downlink Shared Channel (40) is a HS-PDSCH (High Speed Physical Downlink Shared Channel).

5. Method according to one of the preceding claims, wherein the reference provided by the first sub-channels of the Shared Control Channel (30) points to a specific TTI (Transmission Time Interval).

6. Method according to one of the preceding claims, wherein a Dedicated Physical Control Channel, especially a HS-DPCCH (High Speed Dedicated Physical Control Channel), is used for the transmission of uplink control data from the first User Equipment (21) and the second User Equipment (22) to the base station entity (11).

7. Method according to one of the preceding claims, wherein the base station entity (11) initiates the first sub-channel (31) pointing to the same subset of the second sub-channels (41, ..., 48) as the further first sub-channel (32) in case that both the first and the second User Equipment (21, 22) are to receive the identical content data.

8. Public land mobile network (10) providing the transmission of data from a base station entity (11) to a first User Equipment (21) and to at least a second User Equipment (22), wherein the public land mobile network (10) is configured to use a Shared Control Channel (30) comprising a plurality of first sub-channels (31, 32) and a Physical Downlink Shared Channel (40) comprising a plurality of second sub-channels (41, 42, 43) for the transmission to the first User Equipment (21) and to the second User Equipment (22), wherein each second sub-channel (41, 42, 43) which is used for the downlink transmission of data to one of the first User Equipment (21) or the second User Equipment (22) is referenced by a first sub-channel (31, 32) out of the plurality of first sub-channels (31, 32) of the Shared Control Channel (30), wherein the public land mobile network (10) is provided such that for the downlink transmission of identical content data to both the first User Equipment (21) and the second User Equipment (22):
-- a subset of the second sub-channels (41, ..., 48) is used to transmit the identical content data simultaneously to both the first User Equipment (21) and the second User Equipment (22), the subset of the second sub-channels (41, ..., 48) comprising one second sub-channel or a plurality of second sub-channels of the Physical Downlink Shared Channel (40),
-- an identifier of the first User Equipment (21) is mapped to a first sub-channel (31) of the plurality of first sub-channels (31, 32) of the Shared Control Channel (30) so that this first sub-channel (31) indicates the transmission of the identical content data to the first User Equipment (21) on the subset of the second sub-channels (41, ... , 48), and
-- an identifier of the second User Equipment (22) is mapped to a further first sub-channel (32) of the plurality of first sub-channels (31, 32) of the Shared Control Channel (30) so that this further first sub-channel (32) indicates the transmission of the identical content data to the second User Equipment (22) on the subset of the second sub-channels (41, ..., 48), and
-- the first sub-channel (31) points to the same subset of the second sub-channels (41, ... , 48) as the further first sub-channel (32).

9. Public land mobile network (10) according to claim 7, wherein the first User Equipment (21) and the second User Equipment (22) are both located within the same radio cell (15) or segment of a radio cell.

10. Public land mobile network (10) according to claim 7 or 8, wherein the downlink transmission of data to the first and second User Equipment (21, 22) is realized according to a HSDPA- technology (High Speed Downlink Packet Access).

11. Public land mobile network (10) according to one of the preceding claims, wherein the Shared Control Channel (30) is a HS-SCCH (High Speed Shared Control Channel), and/or wherein the Physical Downlink Shared Channel (40) is a HS-PDSCH (High Speed Physical Downlink Shared Channel).

12. Base station entity (11) providing the transmission of data from a public land mobile network (10) to a first User Equipment (21) and to at least a second User Equipment (22), wherein the base station entity (11) is configured to use a Shared Control Channel (30) comprising a plurality of first sub-channels (31, 32) and a Physical Downlink Shared Channel (40) comprising a plurality of second sub-channels (41, 42, 43) for the transmission to the first User Equipment (21) and to the second User Equipment (22), wherein each second sub-channel (41, 42, 43) which is used for the downlink transmission of data to one of the first User Equipment (21) or the second User Equipment (22) is referenced by a first sub-channel (31, 32) out of the plurality of first sub-channels (31, 32) of the Shared Control Channel (30), wherein the base station entity (11) is provided such that for the downlink transmission of identical content data to both the first User Equipment (21) and the second User Equipment (22):
-- a subset of the second sub-channels (41, ..., 48) is used to transmit the identical content data simultaneously to both the first User Equipment (21) and the second User Equipment (22), the subset of the second sub-channels (41, ..., 48) comprising one second sub-channel or a plurality of second sub-channels of the Physical Downlink Shared Channel (40),
-- an identifier of the first User Equipment (21) is mapped to a first sub-channel (31) of the plurality of first sub-channels (31, 32) of the Shared Control Channel (30) so that this first sub-channel (31) indicates the transmission of the identical content data to the first User Equipment (21) on the subset of the second sub-channels (41, ... , 48), and
-- an identifier of the second User Equipment (22) is mapped to a further first sub-channel (32) of the plurality of first sub-channels (31, 32) of the Shared Control Channel (30) so that this further first sub-channel (32) indicates the transmission of the identical content data to the second User Equipment (22) on the subset of the second sub-channels (41, ..., 48), and
-- the first sub-channel (31) points to the same subset of the second sub-channels (41, ..., 48) as the further first sub-channel (32).

13. Base station entity (11) according to claim 11, wherein the base station entity is a NodeB for a Universal Mobile Telecommunication System (UMTS) Terrestrial Radio Access Network (UTRAN) or an eNodeB for an Evolved Universal Mobile Telecommunication System (UMTS) Terrestrial Radio Access Network (E-UTRAN).

14. Base station entity (11) according to claim 11 or 12, wherein the base station entity (11) comprises a scheduler element (12), wherein the scheduler element (12) controls both the Shared Control Channel (30) and the Physical Downlink Shared Channel (40).

15. Program comprising a computer readable program code for executing a method according to one of claims 1 to 6 or for configuring or controlling a Base station entity (11) according claim 11 or a public land mobile network (10) according to claim 7.
